# FASCICULE DE BREVET EUROPEEN

(11) **EP 1 347 464 B1**
(45) Date de publication et mention de la délivrance du brevet: **19.09.2007**
(21) Numéro de dépôt: 03290735.4
(22) Date de dépôt: 21.03.2003
(51) Int. Cl.: H01B 3/44, H01B 7/295, C08K 3/22, C08L 23/08

(54) **Composition isolante pour cable électrique de sécurité**
Isolierende Zusammensetzung für ein Sicherheits-Stromkabel
Insulating composition for an electric safety power cable

(30) Priorité: 22.03.2002 FR 0203867
(43) Date de publication de la demande: 24.09.2003
(73) Titulaire: Nexans, 75008 Paris (FR)
(72) Inventeur: David, Christelle, 69100 Villeurbanne (FR); Demay, Jean-Noel, 69390 Vernaison (FR); Gardelein, Michel, 69130 Ecully (FR); Lejeune, Martine, 87100 Limoges (FR)
(74) Mandataire: Lenne, Laurence

(56) Documents cités:
- EP-A- 0 333 514
- EP-A- 0 559 382
- DE-A- 19 717 645

## Description

La présente invention concerne une composition isolante pour câble électrique de sécurité, résistant au feu .

Un tel câble électrique a pour propriété de continuer à fonctionner pendant un temps défini par les normes d'essais au feu, et cela en toute sécurité pour son environnement. La couche de matière isolante entourant le conducteur doit donc conserver son caractère isolant sur une plage de températures, de 20 à 1100°C, et présenter une cohésion mécanique suffisante de ses cendres.

Une composition connue de couche isolante résistante au feu est décrite dans le document de brevet WO 98/43251.

Cette couche isolante comprend un premier composant constitué de caoutchouc de silicone ou d'un monomère ou polymère d'éthylène et de propylène, d'un deuxième composant constitué d'une charge céramique fusible et d'un troisième composant constitué d'un oxyde réfractaire.

Dans ce document de brevet antérieur, il est proposé plus précisément d'utiliser comme premier composant de l'éthylène-propylène terpolymère ou de l'éthylène-propylène diènemonomère. Un taux de charge céramique fusible important, pouvant atteindre plus de 200 parties en poids pour 100 parties en poids de polymère, est également employé.

Une telle composition pose plusieurs problèmes techniques.

Le premier composant, caoutchouc de silicone ou monomère ou polymère d'éthylène et de propylène, nécessite un traitement par réticulation péroxyde.

Par ailleurs, si la charge céramique fusible permet la formation d'un verre assurant la tenue au feu de l'isolant, il s'avère que sa trop importante teneur est préjudiable aux qualités d'isolation électrique de l'isolant. Un taux de charge trop important est également un inconvénient pour que la composition soit extrudable et réticulable.

Il s'avère que des mélanges à haute teneur en charge et en péroxyde conduisent à une composition de viscosité élevée et à un autoéchauffement important au cours du mélange des composants, entraînant la décomposition précoce du péroxyde et l'apparition d'un phénomène de grillage, la composition se réticulant partiellement dans le mélangeur. Ce phénomène de grillage peut également survenir au cours de l'extrusion par suite d'un autoéchauffement mécanique trop élevé par suite de la haute viscosité de la composition.

L'invention résout ces problèmes, en assurant un compromis optimal entre les propriétés d'isolation thermique et d'isolation électrique de l'isolant et, pour ce faire, elle propose une composition isolante électriquement, résistante à une température élevée T, comportant un premier composant constitué d'un polymère organique, de température de décomposition inférieure à ladite température T, un deuxième composant constitué d'une charge céramique fusible, de température de fusion inférieure à ladite température T, et d'un troisième composant constitué d'une charge réfractaire, de température de fusion supérieure à ladite température T, caractérisée en ce que le taux de charge céramique fusible est égal ou inférieur à 50 parties en poids pour 100 parties en poids de polymère.

Cette température élevée T est avantageusement la température maximale de l'essai au feu, soit 1100°C.

Selon un mode de réalisation préféré, ledit polymère est du copolymère d'éthylène.

Avantageusement, ledit polymère est du copolymère éthylène-octène ou un mélange à base de copolymère éthylène-octène.

De préférence, ladite charge céramique fusible est choisie parmi l'oxyde de bore (B₂O₃), les borates de zinc (4ZnO B₂O₃ H₂O ou 2ZnO 3B₂O₃ 3,5H₂O) et les phosphates de bore (BPO₄) anhydres ou hydratés ou un mélange de ces composants. Cette charge céramique fusible a un point de fusion inférieure à 500°C et donne naissance à un verre sous l'effet de la température.

De préférence, ladite charge réfractaire est choisie parmi l'oxyde de magnésium MgO, et le mica muscovite (6 SiO₂ - 3 Al₂O₃ - K₂O - 2H₂O) ou un mélange de ces charges.

La composition est réalisée soit par mélange thermoplastique, soit par réticulation silane par exemple par technique sioplas. Dans ce dernier cas, le borate de zinc est plus approprié en tant que charge céramique fusible. Cette réticulation est plus légère en équipement et permet des vitesses d'extrusion plus élevées que la réticulation par péroxyde. De plus, une telle réticulation n'exerce pas de pression sur les composants du câble car elle est réalisée à la pression atmosphérique ou à très faible pression de vapeur d'eau contrairement à la réticulation au péroxyde qui est réalisée classiquement sous tube vapeur à pression élevée.

Il est à noter que l'emploi en tant que premier composant d'un polymère totalement dégradable permet d'obtenir par le choix de la charge réfractaire un rapport du coefficient de dilatation du métal formant le conducteur et du coefficient de dilatation de la charge proche de 1. A titre d'exemple, sur une plage de 20 à 1000°C, le coefficient de dilatation de la silice est de 4.10⁻⁶ °C⁻¹, celui du cuivre est de 18.10⁻⁶ °C⁻¹ et celui de l'oxyde de magnésium de 12 à 14.10⁻⁶ °C⁻¹. Un câble à isolation chargée d'oxyde de magnésium aura donc une tenue mécanique meilleure qu'un câble chargé de silice suite à la décomposition de caoutchouc de silicone.

Cette composition reste isolante électriquement sur une large plage de températures, environ de 20°C à 1100°C, et assure donc la maintien de l'isolation du conducteur dans des conditions d'incendie en se transformant en couche céramique dure. Lors de l'utilisation courante du câble électrique revêtu d'une couche constitué d'une telle composition, c'est-à-dire à température ambiante, c'est le polymère qui assure l'isolation du conducteur et confère la tenue mécanique et la flexibilité du câble. Lors de fortes températures, en particulier en cas d'incendie, le polymère est complétement dégradé ; c'est donc la charge réfractaire présente qui prend le relais en terme d'isolation électrique en formant, par frittage grâce au verre formé par la charge céramique fusible, une couche céramique dure et isolante autour du conducteur.

La composition conforme à l'invention est fabriquée par exemple en mélangeur interne avec une étape supplémentaire de prémélange des charges minérales entre elles par l'intermédiaire d'un mélangeur à pâles, afin d'obtenir une distribution homogène de la charge céramique fusible au sein de la charge réfractaire également céramique telle que l'oxyde de magnésium et ainsi augmenter la cohésion de la couche céramique.

Selon un premier mode de réalisation spécifique préféré, la composition comprend :
- 100 parties en poids de copolymère éthylène-octène,
- 100 à 200 parties en poids d'oxyde de magnésium,
- 5 à 50 parties en poids d'oxyde de bore ou de borate de zinc ou de phosphate de bore,
- 5 à 150 parties en poids d'autres charges et d'agents de mise en oeuvre et de protection.

Compte tenu de la forte réfractarité de l'oxyde de magnésium dont la température de fusion est d'environ 2800°C, il est préférable d'utiliser un oxyde très fondant, tel que l'oxyde de bore, qui mouille les grains de magnésie et facilite son frittage lors de l'incendie.

Selon un second mode de réalisation spécifique préféré, la composition comprend
- 100 parties en poids de copolymère éthylène-octène,
- 100 à 200 parties en poids de mica muscovite,
- 5 à 50 parties en poids de phosphate de bore ou de borate de zinc,
- 5 à 150 parties en poids d'autres charges et d'agents de mise en oeuvre et de protection.

L'invention concerne également un câble électrique comportant au moins un conducteur 1 revêtu d'une première couche 2 interne d'isolant et d'une seconde couche 3 externe d'isolant, ladite première couche 2 étant constituée d'une composition selon le premier mode de réalisation spécifique précédent, présentant des propriétés d'isolation électrique particulièrement élevées, et la seconde couche 3 étant constituée d'une composition selon le second mode de réalisation spécifique.

Ce câble comporte donc une isolation bicouche. La première couche 2 en contact avec le conducteur 1, par exemple en cuivre, assure l'isolation électrique lors d'une montée en température et la seconde couche 3 externe assure la tenue mécanique aux hautes températures en formant une croûte dure autour du conducteur.

Ces deux couches sont avantageusement coextrudées.

A titre indicatif sont précisés ci-après des exemples de compositions isolantes conformes à l'invention :
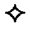 Compositions à base de mica :

| | |
|---|---|
| Exemple 1 | 55 phr copolymère éthylène-acétate de vinyle |
| | + 25 phr terpolymère éthylène- propylène-diène |
| | + 20 phr terpolymère éthylène- ester acrylique-anhydride maléique |
| | ou 100phr de copolymère éthylène-octène |
| | 5 à 50 phr borate de zinc ou phosphate de bore |
| | 100 à 200 phr mica |
| | 0 à 60 phr trihydrate d'aluminium ou dihydrate de magnésium |
| | 5 à 15 phr cire |
| | 0 à 5 phr ZnO |
| | 2 à 15 phr silane |
| | 2 à 5 phr antioxydant |
| | 0 à 15 phr agent de réticulation |
| Exemple 2 | 55 phr copolymère éthylène-octène |
| | 25 phr terpolymère éthylène-propylène-diène |
| | 20 phr copolymère éthylène-ester acrylique |
| | 5 à 50 phr borate de zinc ou phosphate de bore |
| | 100 à 200 phr mica |
| | 0 à 60 phr trihydrate d'aluminium ou dihydrate de magnésium |
| | 5 à 15 phr cire |
| | 0 à 5 phr ZnO |
| | 2 à 15 phr silane |
| | 2 à 5 phr antioxydant |
| | 0 à 15 phr agent de réticulation |
| | |
| Exemple 3 | 75 phr copolymère éthylène-octène |
| | 25 phr copolymère éthylène-ester acrylique |
| | 5 à 50 phr borate de zinc ou phosphate de bore |
| | 100 à 200 phr mica |
| | 0 à 60 phr trihydrate d'aluminium ou dihydrate de magnésium |
| | 5 à 15 phr cire |
| | 0 à 5 phr ZnO |
| | 2 à 15 phr silane |
| | 2 à 5 phr antioxydant |
| | 5 à 15 phr agent de réticulation |

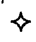 Compositions à base d'oxyde de magnésium (MgO):

| | |
|---|---|
| Exemple 4 | 75 phr copolymère éthylène-octène |
| | 25 phr copolymère éthylène-ester acrylique |
| | 5 à 50 phr borate de zinc ou oxyde de bore |
| | 100 à 200 phr MgO |
| | 0 à 60 phr trihydrate d'aluminium ou dihydrate de magnésium |
| | 5 à 20 phr cire |
| | 2 à 15 phr silane |
| | 2 à 5 phr antioxydant |
| | 0 à 15 phr agent de réticulation |

| | |
|---|---|
| Où phr représente les parties en poids pour 100 parties de résine. | |

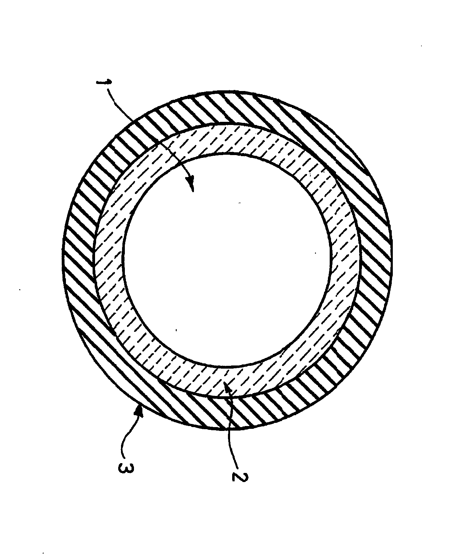

## Revendications

1. Composition isolante électriquement résistante à une température élevée (T) et présentant également une bonne tenue mécanique à cette température, comportant un premier composant constitué ; d'un polymère organique, de température de décomposition inférieure à ladite température (T), un deuxième composant constitué d'une charge céramique fusible de température de fusion inférieure à ladite température (T) et étant présente à raison de 5 à 50 parties en poids pour 100 parties en poids de polymère, un troisième composant constitué d'une charge réfractaire, de température de fusion supérieure à ladite température (T), **caractérisée en ce que** ladite charge réfractaire est choisie parmi l'oxyde de magnésium, le mica muscovite, et leurs mélanges.

2. Composition selon la revendication 1, **caractérisée en ce que** la charge réfractaire est présente à raison de 100 à 200 parties en poids pour 100 parties en poids de polymère.

3. Composition selon la revendication 1 ou 2, **caractérisée en ce que** ledit polymère est du copolymère d'éthylène.

4. Composition selon l'une quelconque des revendications précédentes, **caractérisée en ce que** ledit polymère est un copolymère éthylène-octène ou un mélange à base de copolymère éthylène-octène.

5. Composition selon l'une quelconque des revendications précédentes, **caractérisée en ce qu**'elle est réalisée par réticulation silane.

6. Composition selon l'une quelconque des revendications précédentes, **caractérisée en ce que** ladite charge céramique fusible est choisie parmi l'oxyde de bore, les borates de zinc et les phosphates de bore, ou un mélange de ces composants.

7. Composition selon l'une quelconque des revendications précédentes, **caractérisée en ce qu**'elle comprend :
- 100 parties en poids de copolymère éthylène-octène ou un mélange à base de copolymère éthylène-octène,
- 100 à 200 parties en poids d'oxyde de magnésium,
- 5 à 50 parties en poids d'oxyde de bore ou de borate de zinc ou de phosphate de bore,
- 5 à 150 parties en poids d'autres charges et d'agents de mise en oeuvre et de protection.

8. Composition selon l'une des revendications 1 à 6, **caractérisée en ce qu**'elle comprend :
- 100 parties en poids de copolymère éthylène-octène ou un mélange à base de copolymère éthylène-octène,
- 100 à 200 parties en poids de mica muscovite,
- 5 à 50 parties en poids de borate de zinc ou de phosphate de bore,
- 5 à 150 parties en poids d'autres charges et d'agents de mise en oeuvre et de protection.

9. Câble électrique comportant au moins un conducteur (1) revêtu d'une première couche (2) interne d'isolant et d'une seconde couche 3) externe d'isolant, **caractérisé en ce que** ladite première couche (2) est constituée d'une composition selon la revendication 7 et la seconde couche (3) est constituée d'une composition selon la revendication 8.

## Claims

1. An electrically insulating composition resistant to high temperature (T) and also having good mechanical strength at this temperature, including a first component consisting of an organic polymer, with a decomposition temperature below said temperature (T), a second component consisting of a fusible ceramic filler with a melting temperature below said temperature (T) and being present in an amount from 5 to 50 parts by weight per 100 parts by weight of polymer, a third component consisting of a refractory filler, with a melting temperature above said temperature (T), **characterized in that** said refractory filler is selected from magnesium oxide, muscovite mica, and mixtures thereof.

2. The composition according to claim 1, **characterized in that** the refractory filler is present in an amount from 100 to 200 parts by weight per 100 parts by weight of polymer.

3. The composition according to claim 1 or 2, **characterized in that** said polymer is an ethylene copolymer.

4. The composition according to any of the preceding claims, **characterized in that** said polymer is an ethylene-octene copolymer or a mixture based on an ethylene-octene copolymer.

5. The composition according to any of the preceding claims, **characterized in that** it is produced by silane crosslinking.

6. The composition according to any of the preceding claims, **characterized in that** said fusible ceramic filler is selected from boron oxide, zinc borates and boron phosphates, or a mixture of these components.

7. The composition according to any of the preceding claims, **characterized in that** it comprises:
- 100 parts by weight of an ethylene-octene copolymer or a mixture based on an ethylene-octene copolymer,
- 100 to 200 parts by weight of magnesium oxide,
- 5 to 50 parts by weight of boron oxide of zinc borate or boron phosphate,
- 5 to 150 parts by weight of other fillers and application and protective agents.

8. The composition according to any of claims 1 to 6, **characterized in that** it comprises:
- 100 parts by weight of an ethylene-octene copolymer or a mixture based on an ethylene-octene copolymer,
- 100 to 200 parts by weight of muscovite mica,
- 5 to 50 parts by weight of zinc borate or boron phosphate,
- 5 to 150 parts by weight of other fillers and application and protective agents.

9. An electric cable including at least one conductor (1) coated with a first inner layer (2) of insulator and a second outer layer (3) of insulator, **characterized in that** said first layer (2) consists of a composition according to claim 7 and the second layer (3) consists of a composition according to claim 8.

## Patentansprüche

1. Isolierende Zusammensetzung, welche bei einer erhöhten Temperatur (T) elektrisch widerstandsfähig ist und ebenfalls bei dieser Temperatur ein gutes mechanisches Verhalten aufweist, welche einen ersten Bestandteil aufweist, der aus einem organischen Polymer mit einer Zersetzungstemperatur kleiner als die Temperatur (T), einen zweiten Bestandteil, der aus einem schmelzbaren keramischen Füllstoff mit einer Schmelztemperatur kleiner als die Temperatur (T) gebildet ist und zu 5 bis 50 Gewichtsanteilen pro 100 Gewichtsanteile des Polymers vorliegt, und einen dritten Bestandteil aufweist, der aus einem hitzebeständigen Füllstoff mit einer Schmelztemperatur größer als die Temperatur (T) gebildet ist, **dadurch gekennzeichnet, dass** der hitzebeständige Füllstoff aus Magnesiumoxid, Muskovit-Glimmer und deren Mischungen gewählt ist.

2. Zusammensetzung gemäß Anspruch 1, **dadurch gekennzeichnet, dass** der hitzebeständige Füllstoff zu 100 bis 200 Gewichtsanteilen pro 100 Gewichtsanteilen des Polymers vorliegt.

3. Zusammensetzung gemäß Anspruch 1 oder 2, **dadurch gekennzeichnet, dass** das Polymer ein Ethylen-Copolymer ist.

4. Zusammensetzung gemäß einem der vorausgegangenen Ansprüche, **dadurch gekennzeichnet, dass** das Polymer ein Ethylen-Octen-Copolymer oder eine Mischung auf Basis des Ethylen-Octen-Copolymers ist.

5. Zusammensetzung gemäß einem der vorausgegangenen Ansprüche, **dadurch gekennzeichnet, dass** sie durch Silan-Vernetzung hergestellt ist.

6. Zusammensetzung gemäß einem der vorausgegangenen Ansprüche, **dadurch gekennzeichnet, dass** der schmelzbare keramische Füllstoff aus Boroxid, den Zinkboraten und den Borphosphaten oder einer Mischung dieser Bestandteile gewählt wird.

7. Zusammensetzung gemäß einem der vorausgegangenen Ansprüche, **dadurch gekennzeichnet, dass** sie aufweist:
100 Gewichtsanteile des Ethylen-Octen-Copolymers oder einer Mischung auf Basis des Ethylen-Octen-Copolymers,
100 bis 200 Gewichtsanteile Magnesiumoxid,
5 bis 50 Gewichtsanteile Boroxid oder Zinkborat oder Borphosphat,
5 bis 150 Gewichtsanteile anderer Füllstoffe und Mittel zur Umsetzung und zum Schutz.

8. Zusammensetzung gemäß einem der Ansprüche 1 bis 6,
**dadurch gekennzeichnet, dass** sie aufweist:
100 Gewichtsanteile des Ethylen-Octen-Copolymers oder einer Mischung auf Basis des Ethylen-Octen-Copolymers,
100 bis 200 Gewichtsanteile Muskovit-Glimmer,
5 bis 50 Gewichtsanteile Zinkborat oder Borphosphat,
5 bis 150 Gewichtsanteile anderer Füllstoffe und Mittel zur Umsetzung und zum Schutz.

9. Stromkabel, welches wenigstens einen mit einer ersten inneren isolierenden Schicht (2) und einer zweiten äußeren isolierenden Schicht (3) beschichteten Leiter (1) aufweist, **dadurch gekennzeichnet, dass** die erste Schicht (2) aus einer Zusammensetzung gemäß Anspruch 7 gebildet ist und die zweite Schicht (3) aus einer Zusammensetzung gemäß Anspruch 8 gebildet ist.
